# EUROPÄISCHE PATENTSCHRIFT

(11) **EP 3 593 688 B1**
(45) Veröffentlichungstag und Bekanntmachung des Hinweises auf die Patenterteilung: **23.06.2021**
(21) Anmeldenummer: 19168681.5
(22) Anmeldetag: 11.04.2019
(51) Int. Cl.: A47K 3/02, A47K 3/40, C23D 5/00, C03C 8/14

(54) **VERFAHREN ZUR HERSTELLUNG EINES EMAILLIERTEN SANITÄRPRODUKTES UND EMAILLIERTES SANITÄRPRODUKT**
METHOD OF MANUFACTURING AN ENAMELLED SANITARY PRODUCT AND ENAMELLED SANITARY PRODUCT
MÉTHODE DE PRODUCTION D'UN PRODUIT SANITAIRE REVÊTU DE ÉMAIL ET PRODUIT SANITAIRE REVÊTU DE ÉMAIL

(30) Priorität: 13.07.2018 DE 102018117037
(43) Veröffentlichungstag der Anmeldung: 15.01.2020
(73) Patentinhaber: Franz Kaldewei GmbH & Co. KG, 59229 Ahlen (DE)
(72) Erfinder: VOLKER Gerhard, 59077 Hamm (DE); Deinert Raphael, 33442 Herzebrock-Clarholz (DE)
(74) Vertreter: Andrejewski - Honke Patent- und Rechtsanwälte Partnerschaft mbB

(56) Entgegenhaltungen:
- DE-A1-102011 050 994
- KR-B1- 101 044 400
- SU-A1- 1 477 703
- US-A1- 2011 262 758
- Özge Isiksaçan ET AL: "Copyright to IARJSET Vitreous Enamel Coating Surface Defects and Evaluation of the Causes", International Advanced Research Journal in Science, Engineering and Technology ISO, 31. Mai 2018 (2018-05-31), XP055620517, DOI: 10.17148/IARJSET.2018.552 Gefunden im Internet: URL:https://www.iarjset.com/wp-content/upl oads/2018/05/IARJSET-2.pdf [gefunden am 2019-09-10]
- Alfons Oebbeke: "Nahezu unsichtbare rutschhemmende Oberflächenvergütung für emaillierte Duschflächen", , 29. März 2013 (2013-03-29), XP055620523, Gefunden im Internet: URL:https://www.baulinks.de/webplugin/2013 /0568.php4 [gefunden am 2019-09-10]

## Beschreibung

Die Erfindung betrifft ein Verfahren zur Herstellung eines emaillierten Sanitärproduktes, insbesondere in Form einer Badewanne, einer Duschwanne, einer Duschfläche oder eines Bodenpaneels, wobei aus einer gemahlenen Email-Fritte eine Auftragsmasse gebildet, auf einen metallischen Grundkörper aufgebracht und eingebrannt wird. Die Erfindung geht demnach von einem üblichen Emaillier-Verfahren zur Bildung eines emaillierten Sanitärproduktes aus.

Gegenstand der Erfindung ist auch ein Rohling zur Bildung eines metallischen Sanitärproduktes mit einem metallischen Grundkörper und mit einer auf dem Grundkörper angeordneten, eine gemahlene Email-Fritte aufweisenden Beschichtung. Bei dem Rohling handelt es sich um ein Zwischenprodukt des zuvor beschriebenen Verfahrens vor dem Einbrennprozess.

Schließlich betrifft die Erfindung auch das Endprodukt, nämlich ein emailliertes Sanitärprodukt, insbesondere in Form einer Badewanne, Duschwanne, Duschfläche oder eines Bodenpaneels, mit einem metallischen Grundkörper und mit einer Deckemail-Schicht, welche auf dem metallischen Grundkörper angeordnet ist und eine Oberfläche bildet.

Die Herstellung von Email und emaillierten Produkten ist dem Fachmann bekannt. Hierzu wird auf das "Römpp Chemie Lexikon", Band 2, 9. Auflage, 1990, S. 1147 ff. sowie "Ullmanns Encyklopädie der technischen Chemie", Band 10, 4. Auflage, 1975, S. 436 bis 447 verwiesen.

Als Rohstoffe für die Email-Herstellung dienen Quarz, Feldspat, Soda, Calciumcarbonat, Borax, Natriumnitrat und Flussspat sowie Zuschläge gemäß dem jeweiligen Verwendungszweck. Die Rohstoffe werden gemischt und bei ca. 1200 °C geschmolzen und zum Erstarren gebracht, wobei die Fritte in Form von Granalien oder Schuppen entsteht, wobei im Rahmen der Erfindung der Begriff Email-Fritte sich auch auf ein Gemisch unterschiedlicher Fritten beziehen kann, wobei ein Gemisch von zumindest zwei Fritten bevorzugt ist.

Es ist bekannt, Emails nach ihren Aufgaben zu unterscheiden. So wird bei der Emaillierung häufig ein mehrschichtiger Aufbau mit einem Grundemail und einem Deckemail vorgesehen, wobei das Grundemail eine intensive Haftung zwischen dem metallischen Träger herstellt und das Deckemail hinsichtlich seiner mechanischen Eigenschaften, dekorativen Eigenschaften sowie seiner Korrosionsbeständigkeit optimiert ist.

In dem Bereich von emaillierten Sanitärprodukten wie Badewannen, Duschwannen, Duschflächen und Bodenpaneelen wird hinsichtlich der Farbe und der Oberflächenbeschaffenheit für eine freie Gestaltung eine große Flexibilität verlangt. So sind beispielsweise (ähnlich wie bei Fahrzeuglacken) einerseits sehr glatte, glänzende Email-Oberflächen und andererseits matte Email-Oberflächen bekannt.

Gemäß dem unterschiedlichen Erscheinungsbild wird auch in der Praxis zwischen Mattfritte und Glanzfritte unterschieden.

Oberflächen und insbesondere Trittflächen im Sanitärbereich bergen in der Regel unter Feuchtigkeitseinfluss ein hohes Risiko, auf ihnen auszurutschen. Dabei bildet sich zwischen der menschlichen Haut und der jeweiligen Oberfläche ein dünner Wasserfilm, dessen Entstehung durch oberflächenaktive Substanzen, wie sie in Körperpflegeprodukten wie Duschgelen, Badezusätzen, Shampoos oder Hautpflegeprodukten enthalten sind, nochmals begünstigt wird.

Um eine Oberfläche rutschhemmend auszugestalten, muss der Wasserfilm zumindest teilweise durchbrochen werden. Hierzu sind unterschiedliche Maßnahmen zur Erzeugung von Rauigkeiten und Mikrokanten möglich. Im Bereich emaillierter Oberflächen ist es bekannt, auf eine glatte, glänzende Deckemaillierung eine zusätzliche Schicht aus einem speziellen Email aufzubringen, die aufgrund ihrer Zusammensetzung während des Einbrandes nicht glatt aufschmilzt, sondern eine definierte Rauigkeit erzeugt und so eine Rutschhemmung bewirkt.

Eine solche häufig lediglich lokal oder in einem Muster aufgebrachte Anti-Rutsch-Schicht ist durch das Einbrennen untrennbar mit dem darunter liegenden Deckemail verschmolzen.

Eine in der beschriebenen Weise gebildete Bade- oder Duschwanne ist aus DE 69 157 33 U bekannt.

Nachteilig ist, dass bei der bekannten Ausführungsform nach dem Aufbringen des Deckemails ein weiterer Emaillierungsschritt mit einem zur Erzeugung der Rauigkeit geeigneten Schlicker sowie ein weiterer Einbrennvorgang erfolgen muss.

Dieser weitere Beschichtungsschritt kann die gesamte Fläche z.B. einer Duschwanne abdecken oder nur in bestimmten Bereichen von Dusch- und Badewannen erfolgen und so zu einer begrenzten Zone mit erhöhter Rutschhemmung führen. Entsprechende Ausgestaltungen sind in der bereits zuvor genannten DE 69 157 33 U beschrieben.

Ein zusätzlicher Brennvorgang kann vermieden werden, wenn die zusätzliche Beschichtung mit einem geeigneten Schlicker auf einer getrockneten, aber noch nicht gebrannten Deckemail-Schicht erfolgt. Derartige getrocknete Schichten werden als Email-Biskuit oder Biskuit-Schichten bezeichnet. Nach einer weiteren Trocknung wird die Deckemail-Schicht zusammen mit der zusätzlich aufgetragenen Schicht zur Rutschhemmung eingebrannt. Die Schwierigkeit bei einem solchen Verfahren besteht jedoch darin, dass die Biskuit-Schicht aufgrund ihrer geringen Beständigkeit gegen mechanischen Einwirkungen oder gegen das Ablösen oder das Wiederverflüssigen unter Feuchtigkeitseinfluss während des zusätzlichen Beschichtungsvorgangs sehr leicht beschädigt werden kann. Um dann einen Ausschuss des Endproduktes zu vermeiden, muss der metallische Grundkörper von der beschädigten Beschichtung befreit, gesäubert und erneut dem gesamten Prozess zugeführt werden.

Der vorliegenden Erfindung liegt vor diesem Hintergrund die Aufgabe zugrunde, ein Verfahren zur Herstellung eines emaillierten Sanitärproduktes anzugeben, mit dem auf einfache und zulässige Weise eine gute Rutschhemmung erreicht werden kann. Auch ein Rohling zur Bildung eines solchen emaillierten Sanitärproduktes sowie das emaillierte Sanitärprodukt selbst sollen angegeben werden.

Gegenstand der Erfindung und Lösung der Aufgabe sind ein Verfahren gemäß Patentanspruch 1 sowie ein emailliertes Sanitärprodukt gemäß Patentanspruch 9.

Ausgehend von einem gattungsgemäßen Verfahren zur Herstellung eines emaillierten Sanitärproduktes ist demnach vorgesehen, dass die Auftragsmasse unter Zugabe einer thermisch instabilen Verbindung gebildet wird, welche sich bei dem Einbrennvorgang zumindest teilweise unter Bildung von Gas zersetzt, und sich eine Deckemailbeschichtung mit rutschhemmender Oberfläche bildet, welche unterhalb der Oberfläche gasförmige Einschlüsse in Form von Kohlendioxidblasen und an der Oberfläche kraterförmige Ausformungen mit einer Senke und einem erhöhten Wall aufweist, und wobei die Oberfläche eine Trittfläche bildet, wobei die Trittfläche gemäß DIN 51097:1992 eine Rutschhemmung der Bewertungsgruppe B oder C aufweist.

Die Verwendung von thermisch instabilen Zusatzstoffen in Emailschlickern ist grundsätzlich bekannt, da beispielsweise Magnesit bzw. Magnesiumscarbonat ein geeignetes Flussmittel darstellt, um ein möglichst gleichmäßiges Aufschmelzen während des Brennvorgangs zu ermöglichen. Eine entsprechende Ausgestaltung ist beispielsweise aus US 1 477 703 A1 bekannt. Hierbei wird diese thermische Instabilität aber als nachteilig angesehen, dadurch das Austreten der Gasblasen die emaillierte Oberfläche negativ beeinflusst oder gar zerstört werden kann. Die vorliegende Erfindung macht sich diese ursprünglich als nachteilig angesehenen Effekte zunutze, um hierdurch eine rutschhemmende Oberfläche herauszubilden.

SU 1 477 703 A1, US 2011/262758 A1, KR 101 044 400 B1 offenbaren emaillierte Artikel.

DE 10 2011 050994 A1 offenbart sanitäre Einrichtung mit einem Grundkörper aus Metall, der mit einer Emailschicht versehen ist.

Das emaillierte Sanitärprodukt ist üblicherweise dazu vorgesehen, um von einem Benutzer betreten zu werden. Es kann sich demnach vorzugsweise um eine Badewanne, Duschwanne, Duschfläche oder auch ein Bodenpaneel handeln. Gerade wenn ein optisch einheitliches Gesamterscheinungsbild gewünscht wird, können aber auch andere Sanitärprodukte, wie beispielsweise Wandpaneele oder dergleichen, in entsprechender Weise ausgeführt werden, selbst wenn dort eine besondere Rutschhemmung nicht notwendig ist.

Die Auftragsmasse wird üblicherweise in Form eines Schlickers gebildet, der dann als Suspension auf den metallischen Grundkörper aufgesprüht wird. Weniger bevorzugt, aber grundsätzlich nicht ausgeschlossen ist eine Auftragsmasse in Form eines trockenen Pulvers, welches beispielsweise durch elektrostatische Kräfte auf dem metallischen Grundkörper abgeschieden werden kann.

Der Grundkörper ist im Rahmen der Erfindung üblicherweise von einem Metallblech gebildet. Bei einer Ausgestaltung als Duschfläche oder Bodenpaneel kann das Metallblech im Wesentlichen eben ausgeführt sein. Gemäß einer bevorzugten Ausgestaltung der Erfindung ist jedoch vorgesehen, dass der metallische Grundkörper in Form eines Stahlblechs umgeformt ist. Bei einer Duschfläche oder einem Bodenpaneel können beispielsweise die Ränder umgebogen und/oder hochgestellt sein. Bei einer Ausgestaltung als Badewanne oder Duschwanne ist das Stahlblech dagegen in der Regel tiefgezogen.

Die Dicke des Stahlblechs beträgt typischerweise zwischen 1 mm und 3 mm.

Bei dem erfindungsgemäßen Verfahren wird bei der Bildung der Auftragsmasse, also insbesondere einem Schlicker in Form einer wässerigen Suspension die thermisch instabile Verbindung zugegeben, welche sich bei dem Einbrennvorgang zumindest teilweise unter Bildung von Gas zersetzt. Die thermisch instabile Verbindung wird üblicherweise in Form von Partikeln zugegeben, sodass die Bildung von Gas an den einzelnen Partikeln bzw. durch Umwandlung der einzelnen Partikel lokal erfolgt. Entsprechend werden bei dem Einbrennen in der entsprechenden zunächst noch flüssigen Schicht Blasen gebildet.

Bereits durch Erzeugung von Gasblasen wird eine ungleichmäßige Oberflächenstruktur erzeugt, welche bereits in einem gewissen Maße zu der gewünschten Reduzierung der Rutschgefahr beitragen kann. Durch eine aufgrund der Gasblasen innerhalb der Deckemail-Schicht ungleichmäßige und wellige Struktur oder Topographie kann ein dünner Wasserfilm lokal durchbrochen werden.

Zusätzlich können bei dem Einbrennen einzelne Gasblasen in der zunächst noch flüssigen Email-Schicht bis zu der Oberfläche gelangen und dort aufplatzen bzw. die entsprechende Email-Schicht verlassen. Auch dadurch wird eine erhöhte Rauigkeit erreicht, welche wesentlich zu einer Verringerung der Rutschgefahr beiträgt.

Im Rahmen des erfindungsgemäßen Verfahrens ist es insbesondere möglich, eine rutschhemmende Oberfläche mit nur einer Deckemail-Beschichtung zu erreichen, welche in dem beschriebenen Verfahren gebildet ist. Es ergibt sich somit eine sehr robuste, wenig anfällige Beschichtung mit der Auftragsmasse, welche dann mit nur einem Brennprozess fixiert werden kann, wobei gleichzeitig die gewünschte Rutschhemmung durch die Ausbildung der Gasblasen erreicht wird.

Als thermische instabile Verbindung ist insbesondere eine Magnesiumcarbonat-Verbindung vorgesehen. Geeignet sind beispielsweise Magnesiumcarbonat sowie Magnesiumhydroxidcarbonat, welche grundsätzlich auch in einer Mischung vorliegen können. Es handelt sich dabei um Magnesiumcarbonat-Salze, welche sich in etwa bei einer Temperatur von 350 °C zersetzen. Bei einem üblichen Brennvorgang, bei dem die Maximaltemperatur typischerweise zwischen 750 °C und 900 °C und insbesondere etwa 850 °C betragen kann, wird also die Zersetzungstemperatur überschritten, sodass durch den Zerfall der Magnesiumcarbonat-Verbindung Kohlendioxid freigesetzt wird.

Der Grad der Oberflächenwelligkeit bzw. Oberflächenaufrauhung und damit auch der Grad der Rutschhemmung kann durch die Verfahrensführung seitens des Fachmannes variiert werden, wobei optimale Parameter gegebenenfalls durch orientierende Versuche festgelegt werden können.

Zunächst ergibt sich bei dem Einsatz von Magnesiumcarbonat-Verbindungen der Vorteil, dass die Zersetzung über einen gewissen, vergleichsweise langen Zeitraum erfolgt, sodass während des Einbrennens über einen längeren Zeitraum Gas nachgebildet wird, selbst wenn einzelne Blasen die Oberfläche erreichen und somit die flüssige Email-Schicht verlassen.

Darüber hinaus ist auch die Viskosität der flüssigen Email-Schicht ausschlaggebend. Bei einer zunehmenden Viskosität wird die Bewegung der einzelnen Blasen zu der Oberfläche verlangsamt. Wenn sich dabei die Oberfläche bereits abkühlt, kann sich dort bereits eine Art Haut bilden, welche ebenfalls einer übermäßigen Freisetzung des gebildeten Gases entgegenwirkt.

Neben der Auswahl einer geeigneten thermisch instabilen Verbindung, wie insbesondere einer Magnesiumcarbonat-Verbindung, ist selbstverständlich auch der Anteil der thermisch instabilen Verbindung in der Auftragsmasse relevant. Bezogen auf 100 Gewichtsanteile gemahlene Email-Fritte enthält die Auftragsmasse gemäß einer bevorzugten Ausgestaltung der Erfindung zwischen 0,4 und 5 Gewichtsanteile der thermisch instabilen Verbindung.

Wenn die thermisch instabile Verbindung gemäß einer bevorzugten Ausgestaltung der Erfindung in Form von Partikeln vorliegt, ist selbstverständlich auch die Größe der einzelnen Partikel zu berücksichtigen. Auch wenn stets die gewünschte rutschhemmende Wirkung erreicht werden kann, ist im Rahmen von orientierenden Versuchen die Partikelgröße in geeigneter Weise festzulegen. Bei zu kleinen Partikeln ist die gewünschte rutschhemmende Wirkung weniger stark ausgeprägt, weil die einzelnen Gasblasen letztlich sehr fein in der entsprechenden Email-Schicht verteilt sind, und somit auch die durch die Gasblasen bedingte Welligkeit bzw. Aufrauhung der Oberfläche weniger stark ausgeprägt ist. Es ergibt sich eine schaumartige Struktur mit einem hohen Gasgehalt. Die lediglich kleinen Blasen migrieren bei dem Einbrennvorgang auch nur vergleichsweise langsam und gelangen auch nur langsam zu der Oberfläche.

Bei zu großen Partikeln können vergleichsweise große Gasblasen entstehen. Wenn solche großen Gasblasen an der Oberfläche aufplatzen, können sich auch mit dem Auge sichtbare Krater und Farbveränderungen ergeben, die von einem Benutzer als Fehlstelle wahrgenommen werden können. Bei großen Partikeln weisen die entsprechend großen während des Einbrennvorgangs gebildeten Gasblasen eine hohe Beweglichkeit auf und können so zu schnell ausgasen. Abgesehen davon, dass große, gut sichtbare Krater auch aus optischen Gründen nicht gewünscht sind, sind unter Berücksichtigung einer Kantenlänge der gebildeten Krater viele kleine Krater zur Reduzierung der Rutschgefahr in der Regel besser als wenige große Krater.

Um Partikel der thermisch instabilen Verbindung entsprechend in einer optimalen Größe zu erhalten, können diese Partikel auch gemeinsam mit der Email-Fritte gemahlen werden, wobei dann aus dem resultierenden Mahlgut nachfolgend der Schlicker gebildet wird. Durch das gemeinsame Mahlen wird auch eine sehr gute Durchmischung sichergestellt. Gemäß einer bevorzugten Weiterbildung ist dann vorgesehen, dass bei dem Mahlprozess zunächst nur die Email-Fritte mit den üblichen Zusätzen gemahlen und die thermisch instabile Verbindung nachfolgend zugegeben wird.

Wie bereits zuvor erläutert, können die Viskosität der während des Einbrennvorganges flüssigen Email-Schicht sowie das Aushärteverhalten die Beweglichkeit von Gasblasen beeinflussen. Vor diesem Hintergrund ist gemäß einer bevorzugten Ausgestaltung der Erfindung vorgesehen, dass die für die Auftragsmasse vorgesehene Email-Fritte mit zumindest einer Mattfritte und einer Glanzfritte oder einer Glanzfritte und gemahlenem Quarz als höherschmelzende, mattierende Komponente gebildet ist. Darüber hinaus ist es auch möglich, die Auftragsmasse aus einer Glanzfritte einerseits und andererseits aus der Mischung zumindest einer Mattfritte und gemahlenem Quarz zu bilden. Bei dem Einbrennen können Bestandsteile der Mattfritte auskristallisieren, was die Viskosität der geschmolzenen Email-Schicht deutlich erhöht und damit das Ausgasen des Gases verlangsamt. Bei einem Einsatz einer Glanzfritte und gemahlenem Quarz erfolgt die Erhöhung der Viskosität der geschmolzenen Email-Schicht durch eine partielle Auflösung des Quarzes in der Glasmatrix. Vor diesem Hintergrund ist es im Rahmen der Erfindung besonders bevorzugt, wenn bezogen auf 100 Gewichtsanteile Email-Fritte zumindest 20 Gewichtsanteile Mattfritte oder zumindest 10 Gewichtsanteile Quarz vorgesehen sind. Im Rahmen der Erfindung wird in diesem Zusammenhang Quarz als glasbildende Komponente der Email-Fritte bzw. den insgesamt 100 Gewichtsanteilen Email-Fritte zugerechnet. Besonders bevorzugt sind bezogen auf 100 Gewichtsanteile Email-Fritte zwischen 40 bis 60 Gewichtsanteile Mattfritte und zwischen 60 und 40 Gewichtsanteile Glanzfritte bzw. zwischen 60 bis 90 Gewichtsanteile Glanzfritte und 40 bis 10 Gewichtsanteile Quarz vorgesehen. Wenn eine Kombination von zumindest einer Glanzfritte mit zumindest einer Mattfritte und Quarz vorgesehen ist, können die Anteil nach den zuvor beschriebenen Kriterien proportional angepasst werden. In diesem Zusammenhang wird darauf hingewiesen, dass als Email-Fritte im Rahmen der Erfindung auch ein Gemisch von Fritten bzw. Fritte und Quarz und somit der Gesamtanteil bezeichnet ist.

Der bevorzugt zwischen 0,4 und 5 liegende Gewichtsanteil der thermisch instabilen Verbindung wird im Rahmen der Erfindung auch abhängig von der konkret vorgesehenen Email-Fritte ausgewählt. Wenn die Email-Fritte beispielsweise ausschließlich von Mattfritte gebildet ist, so kann der Gewichtsanteil zwischen 0,2 und 2, bevorzugt zwischen 0,5 und 1 liegen. Die angegebenen Werte beziehen sich auch hier auf 100 Gewichtsanteile Email-Fritte.

Bei einer sehr hellen Email-Fritte, welche neben Mattfritte auch Titanweiß-Glanzfritte enthält, liegt der Gewichtsanteil der thermisch instabilen Verbindung, beispielsweise zwischen 1 und 5, insbesondere zwischen 3 und 4.

Wie bereits zuvor erläutert, ist als thermisch instabile Verbindung Magnesiumcarbonat MgCO₃ oder Magenesiumhydroxidcarbonat, wie beispielsweise 4 MgCO₃ x Mg(OH)₂ x 5 H₂O vorgesehen. Handelsübliche Materialien können dabei auch zur Erzeugung einer gewünschten Korngröße gemeinsam mit der Email-Fritte (also vorzugsweise einem Gemisch an Fritten) gemahlen werden. Die Ausgangskorngröße der beschriebenen Magnesiumcarbonat-Verbindungen liegt in Bezug auf die kommerziell günstig verfügbaren Produkte typischerweise in einem Bereich von D₁₀ zwischen 7 µm und 28 µm, D₅₀ zwischen 32 µm und 130 µm und D₉₀ zwischen 55 µm und 220 µm. Die angegebenen Werte beziehen sich dabei gemäß den üblichen Definitionen auf die Korngröße bei 10 %, 50 % und 90 % Siebdurchgang bezogen auf die Gesamtmasse. Die Ausgangskorngröße des gemahlenen Quarzes liegt typischerweise in einem Bereich von D₁₀ zwischen 1 µm und 10 µm, D₅₀ zwischen 20 µm und 50 µm und D₉₀ zwischen 80 µm und 120 µm.

Gegenstand der Offenbarung ist auch der Rohling zur Bildung des emaillierten Sanitärproduktes vor dem Einbrennvorgang, mit einem metallischen Grundkörper (1) und mit einer auf dem Grundkörper (1) angeordneten, eine gemahlene Email-Fritte aufweisenden Beschichtung, dadurch gekennzeichnet, dass die Beschichtung eine thermisch instabile Verbindung aufweist, welche dazu vorgesehen ist, sich bei einem Einbrennvorgang zumindest teilweise unter Bildung von Gas zu zersetzen und eine rutschhemmende Oberfläche zu bilden.

Schließlich ist auch das emaillierte Sanitärprodukt selbst Gegenstand der Erfindung, welches mit dem zuvor beschriebenen Verfahren hergestellt ist. Erfindungsgemäß weist das emaillierte Sanitärprodukt unterhalb der Oberfläche einer Deckemail-Schicht gasförmige Einschlüsse in Form von Kohlendioxidblasen und an der Oberfläche kraterförmige Ausformungen mit jeweils einer Senke und einem erhöhten Wall auf. Diese spezifischen Charakteristika ergeben sich aus der Erzeugung von Kohlendioxid, vorzugsweise aus einer Magnesiumcarbonat-Verbindung als thermisch instabile Verbindung, wobei die zunächst während des Einbrennvorganges innerhalb der Deckemail-Schicht gebildeten Kohlendioxidblasen bei dem Austritt aus der Oberfläche die kraterförmigen Ausformungen bilden. Bei dem fertigen emaillierten Sanitärprodukt sind dann sowohl Einschlüsse in Form von Kohlendioxidblasen als auch kraterförmige Ausformungen vorhanden. Aus der Restfeuchte der Biskuit-Schicht, der thermisch instabilen Verbindung und/oder weiteren Bestandteilen kann bei dem Brennprozess Wasserdampf freigesetzt werden, welcher sich unter anderem auch in den Kohlendioxidblasen sammeln kann. Selbstverständlich können die kraterförmigen Ausformungen in einem gewissen Maße eine ungleichmäßige Struktur haben, wobei aber zumindest bei einem Großteil die kraterförmigen Ausformungen die in etwa mittige Senke und der zumindest teilweise um die Senke umlaufende erhöhte Wall identifiziert werden können.

Im Rahmen der Erfindung ist grundsätzlich eine mehrschichtige Emaillierung nicht ausgeschlossen. Besondere Vorteile ergeben sich jedoch, wenn - wie zuvor erläutert - lediglich eine Deckemail-Schicht vorgesehen ist. Bei einer für Sanitärprodukte üblichen Ausgestaltung wird auf den metallischen Grundkörper als Verbindungs-, Kontakt- und Haftschicht ein Schlicker eines Grundemails aufgetragen und nach dem Trocknen zur Bildung einer Grundemail-Schicht gebrannt, wobei darauf dann in der beschriebenen Weise die Deckemail-Schicht aufgebracht wird. Es sind jedoch auch Ausgestaltungen möglich, bei welchen nur ein Deckemail als sogenanntes Direktemail direkt auf den metallischen Grundkörper aufgebracht ist, wozu dieser aus Nickelstahl besteht bzw. vernickelt ist.

Bei der Ausgestaltung des emaillierten Sanitärproduktes als Badewanne, Duschwanne, Duschfläche oder Bodenpaneel bildet die Oberfläche zumindest abschnittsweise eine Trittfläche, wobei die Trittfläche gemäß DIN 51097:1992 dann eine Rutschhemmung der Bewertungsgruppe B oder C aufweist.

In der nachfolgenden Tabelle sind exemplarisch verschiedene Ausführungsvarianten beschrieben.

| | Schlicker für sehr helle Farben (Weiß-Töne) | | | Schlicker für helle Farben | | | Schlicker für dunkle Farben | |
|---|---|---|---|---|---|---|---|---|
| Fritte A (transparente Mattfritte) | 50 Teile | 20 Teile | | 40 Teile | 20 Teile | | 60 Teile | 40 Teile |
| Fritte B (Transparentfritte) | | | | | | | 40 Teile | 60 Teile |
| Fritte C (halbopake Glanzfritte) | | | | 60 Teile | | | | |
| Fritte D (weiße Mattfritte) | | 50 Teile | | | 40 Teile | | | |
| Fritte E (weiße Glanzfritte) | 50 Teile | 30 Teile | 70 Teile | | 40 Teile | 80 Teile | | |
| Quarz | | | 30 Teile | | | 20 Teile | | |
| Magnesiumcarbonat oder Magnesiumhydroxidcarbonat | 3 Teile | 4 Teile | 2Teile | 2 Teile | 2,5 Teile | 1,5 Teile | 0,5 Teile | 1 Teil |
| Rutschhemmung: Bewertungsgruppe gemäß DIN 51097 | B | C | C | B | B | B | B | C |

Die Erfindung wird im Folgenden anhand einer exemplarischen Zeichnung erläutert. Es zeigen:
- Fig. 1: in einer schematischen Schnittdarstellung einen Ausschnitt eines emaillierten Sanitärproduktes,
- Fig. 2: eine alternative Ausgestaltung des emaillierten Sanitärproduktes,
- Fig. 3: eine Draufsicht auf ein Sanitärprodukt gemäß Fig. 1 oder Fig. 2.

Bei dem emaillierten Sanitärprodukt kann es sich vorzugsweise um eine Badewanne, Duschwanne, Duschfläche oder ein Bodenpaneel handeln, wobei dann an der Oberseite eine Trittfläche für einen Benutzer gebildet ist.

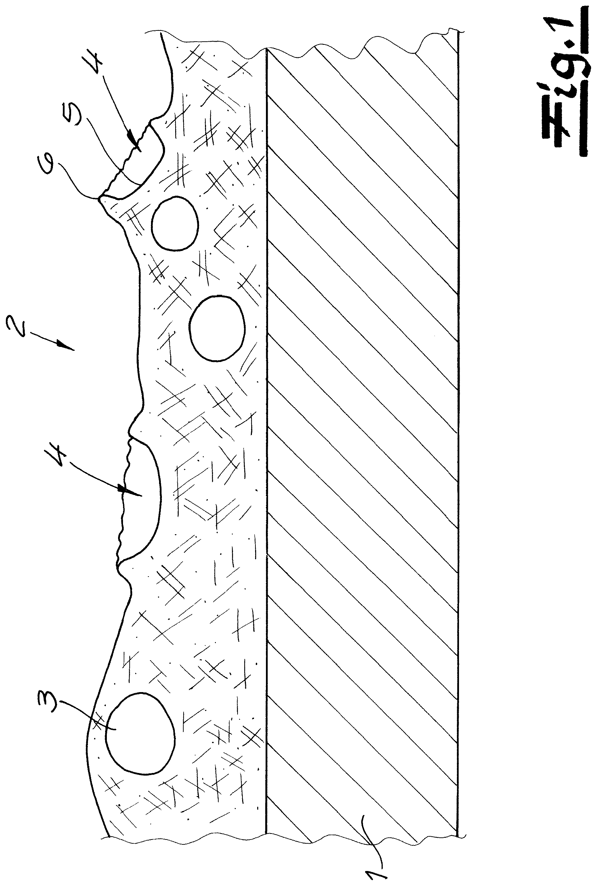

Das emaillierte Sanitärprodukt umfasst gemäß Fig. 1 einen metallischen Grundkörper 1, der üblicherweise aus einem Stahlblech gebildet ist. Auf dem Grundkörper 1 ist eine einzige Deckemail-Schicht 2 als Direktemail angeordnet, welche entsprechend der Tabelle 1 aus dem Gemisch verschiedener gemahlener Fritten gebildet ist.

Erfindungsgemäß wird bei der Herstellung der üblicherweise als Schlicker aufgebrachten Auftragsmasse eine thermisch instabile Verbindung, insbesondere eine Magnesiumcarbonat-Verbindung zugegeben, wobei dann während des Einbrennvorganges die thermisch instabile Verbindung sich unter Bildung von Gas zumindest teilweise zersetzt.

Die Fig. 1 zeigt in diesem Zusammenhang die letztlich bei dem fertigen emaillierten Sanitärprodukt eingefrorene Struktur der Deckemail-Schicht 2. Während des Einbrennvorganges bildet sich durch die Zersetzung der Magnesiumcarbonat-Verbindung einerseits gasförmiges Kohlendioxid und andererseits Magnesiumoxid, welches in die Glasstruktur der Deckemail-Schicht 2 eingebunden wird. Des Weiteren kann auch Wasserdampf erzeugt werden.

Durch die Viskosität der Deckemail-Schicht 2 während des Einbrennvorganges wird das erzeugte Gas in seiner Beweglichkeit beschränkt. Es bilden sich zunächst Einschlüsse 3 in Form von Kohlendioxidblasen. Wenn eine solche Kohlendioxidblase zu der Oberfläche gelangt, so platzt diese auf bzw. verlässt die Deckemail-Schicht 2. Es entsteht dann eine kraterförmige Ausformung 4 mit einer Senke 5 und einem erhöhten Wall 6.

Da lediglich ein Teil der Kohlendioxidblasen die Deckemail-Schicht 2 verlassen kann, weist das emaillierte Sanitärprodukt gemäß der Fig. 1 sowohl Einschlüsse 3 als auch kraterförmige Ausformungen 4 auf, welche gemeinsam zu einer Erhöhung der Welligkeit bzw. Rauigkeit der von der Deckemail-Schicht 2 gebildeten Oberfläche und somit zu einer verbesserten Rutschhemmung beitragen.

Um gemäß der Fig. 1 direkt auf dem metallischen Grundkörper 1 lediglich eine Deckemail-Schicht 2 als Direktemail aufbringen zu können, ist der Grundkörper 1 üblicherweise vernickelt bzw. aus einem Nickelstahl gebildet, um eine ausreichende Haftung der direkt aufgebrachten Deckemail-Schicht 2 zu ermöglichen.

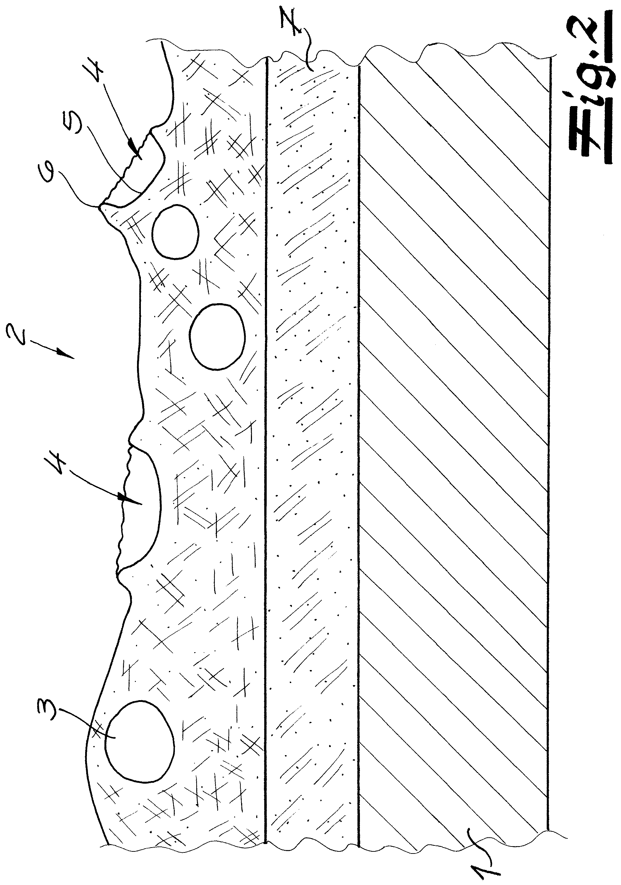

Vor diesem Hintergrund wird gerade bei Sanitärprodukten häufig ein zweischichtiger Aufbau vorgesehen, wobei Fig. 2 hierzu zwischen dem metallischen Grundkörper 1 und der Deckemail-Schicht 2 eine Grundemail-Schicht 7 zeigt. Die Grundemail-Schicht 7 und die Deckemail-Schicht 2 werden in zwei aufeinanderfolgenden Brennvorgängen eingebrannt. Auch im Rahmen einer solchen Ausgestaltung ergibt sich gegenüber dem Stand der Technik der Vorteil, dass direkt mit der Erzeugung der Deckemail-Schicht 2 die gewünschte Rutschhemmung erreicht werden kann.

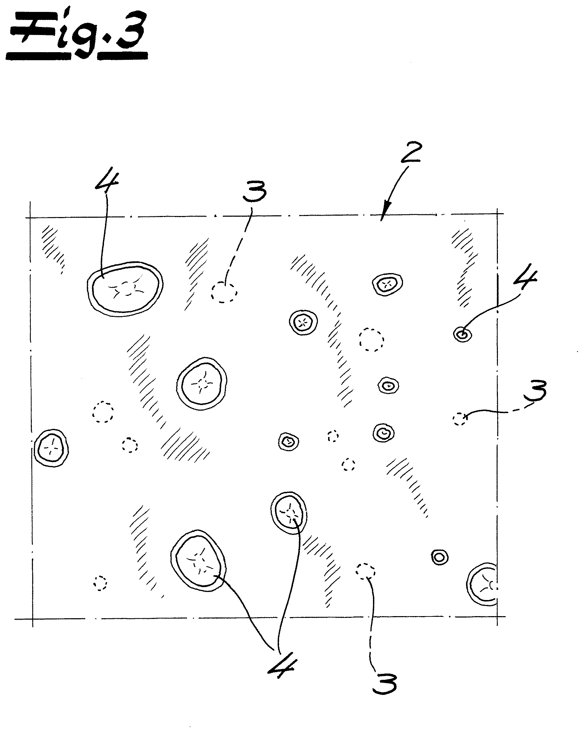

Die Fig. 3 zeigt in einer starken Vergrößerung in einer Draufsicht einen Ausschnitt der Oberfläche eines erfindungsgemäßen emaillierten Sanitärproduktes mit einer Kantenlänge von 2,4 mm mal 2 mm. Anhand des exemplarischen Ausschnittes können für ein konkretes Ausführungsbeispiel die Größe der einzelnen kraterförmigen Ausformungen 4, die Größenverteilung sowie die räumliche Anordnung abgeschätzt werden.

Im Rahmen der Erfindung weisen die Einschlüsse 3 und somit auch die kraterförmigen Ausformungen 4 typischerweise einen Durchmesser zwischen 30 µm und 350 µm auf. Ein mittlerer Durchmesser liegt dabei typischerweise zwischen 60 µm und 200 µm, beispielsweise etwa 120 µm.

## Patentansprüche

1. Verfahren zur Herstellung eines emaillierten Sanitärproduktes, wobei aus zumindest einer gemahlenen Email-Fritte eine Auftragsmasse gebildet, auf einen metallischen Grundkörper (1) aufgebracht und eingebrannt wird, **dadurch gekennzeichnet, dass** die Auftragsmasse unter Zugabe einer thermisch instabilen Verbindung gebildet wird, welche sich bei dem Einbrennvorgang zumindest teilweise unter Bildung von Gas zersetzt und sich eine Deckemail-Beschichtung mit rutschhemmender Oberfläche bildet, welche unterhalb der Oberfläche gasförmige Einschlüsse (3) in Form von Kohlendioxidblasen und an der Oberfläche kraterförmige Ausformungen (4) mit einer Senke (5) und einem erhöhten Wall (66) aufweist, und wobei die Oberfläche eine Trittfläche bildet, wobei die Trittfläche gemäß DIN 51097:1992 eine Rutschhemmung der Bewertungsgruppe B oder C aufweist.

2. Verfahren nach Anspruch 1, **dadurch gekennzeichnet, dass** als thermisch instabile Verbindung zumindest eine Magnesiumcarbonat-Verbindung, insbesondere Magnesiumcarbonat und/oder ein Magnesiumhydroxidcarbonat vorgesehen ist.

3. Verfahren nach Anspruch 1 oder 2, **dadurch gekennzeichnet, dass** die Auftragsmasse bezogen auf 100 Gewichtsanteile gemahlene Email-Fritte, zwischen 0,4 und 5 Gewichtsanteile der thermisch instabilen Verbindung enthält.

4. Verfahren nach einem der Ansprüche 1 bis 3, **dadurch gekennzeichnet, dass** Partikel der thermisch instabilen Verbindung gemeinsam mit der Email-Fritte gemahlen werden.

5. Verfahren nach Anspruch 4, **dadurch gekennzeichnet, dass** bei dem Mahlprozess zunächst nur die Email-Fritte gemahlen und die thermisch instabile Verbindung nachfolgend zugegeben wird.

6. Verfahren nach einem der Ansprüche 1 bis 5, **dadurch gekennzeichnet, dass** bezogen auf 100 Gewichtsanteile Email-Fritte zumindest 10 Gewichtsanteile gemahlener Quarz vorgesehen sind.

7. Verfahren nach einem der Ansprüche 1 bis 6, **dadurch gekennzeichnet, dass** der Einbrennvorgang derart durchgeführt wird, dass die Maximaltemperatur zwischen 750 °C und 900 °C beträgt.

8. Verfahren nach einem der Ansprüche 1 bis 7 **dadurch gekennzeichnet, dass** als metallischer Grundkörper (1) ein umgeformtes, insbesondere tiefgezogenes Stahlblech bereitgestellt wird.

9. Emailliertes Sanitärprodukt hergestellt mit einem Verfahren nach einem der Ansprüche 1 bis 8 mit einem metallischen Grundkörper (1) und mit einer Deckemail-Schicht (2), welche auf dem metallischen Grundkörper (1) angeordnet ist und eine Oberfläche bildet, **dadurch gekennzeichnet, dass** die Deckemail-Schicht (2) unterhalb der Oberfläche gasförmige Einschlüsse (3) in Form von Kohlendioxidblasen und an der Oberfläche kraterförmige Ausformungen (4) mit einer Senke (5) und einem erhöhten Wall (6) aufweist und wobei die Oberfläche eine Trittfläche bildet, wobei die Trittfläche gemäß DIN 51097:1992 eine Rutschhemmung der Bewertungsgruppe B oder C aufweist.

10. Emailliertes Sanitärprodukt nach Anspruch 9, **dadurch gekennzeichnet, dass** die Deckemail-Schicht (2) direkt auf den metallischen Grundkörper (1) aufgebracht ist.

## Claims

1. A method for producing an enamelled sanitary product, in which an application mass is formed from at least one ground enamel frit, applied to a metallic main body (1) and burnt in,
**characterised in that**
the application mass is formed by adding a thermally unstable compound which decomposes at least partially, forming gas, during the burning in process and forms a covering enamel coating which has an anti-slip surface and has gaseous inclusions (3) in the form of carbon dioxide bubbles under the surface and crater-like formations (4) with a depression (5) and an elevated wall (66) at the surface, and wherein the surface forms a tread face, wherein the tread face has an anti-slip effect of classification B or C according to DIN 51097:1992.

2. The method according to Claim 1,
**characterised in that**
at least one magnesium carbonate compound, in particular magnesium carbonate and/or a magnesium hydroxide carbonate, is provided as the thermally unstable compound.

3. The method according to Claim 1 or 2,
**characterised in that**
the application mass contains between 0.4 and 5 parts by weight of the thermally unstable compound in relation to 100 parts by weight of ground enamel frit.

4. The method according to any one of Claims 1 to 3,
**characterised in that**
particles of the thermally unstable compound are ground together with the enamel frit.

5. The method according to Claim 4,
**characterised in that**
during the grinding process, only the enamel frit is ground initially, and the thermally unstable compound is added subsequently.

6. The method according to any one of Claims 1 to 5,
**characterised in that**
at least 10 parts by weight of ground quartz are provided in relation to 100 parts by weight of enamel frit.

7. The method according to any one of Claims 1 to 6,
**characterised in that**
the burning in process is carried out such that the maximum temperature is between 750°C and 900°C.

8. The method according to any one of Claims 1 to 7,
**characterised in that**
a formed, in particular deep-drawn, steel sheet is provided as the metallic main body (1).

9. An enamelled sanitary product produced using a method according to any one of Claims 1 to 8, having a metallic main body (1) and a covering enamel layer (2) which is situated on the metallic main body (1) and forms a surface,
**characterised in that**
the covering enamel layer (2) has gaseous inclusions (3) in the form of carbon dioxide bubbles under the surface and crater-like formations (4) with a depression (5) and an elevated wall (6) at the surface, and wherein the surface forms a tread face, wherein the tread face has an anti-slip effect of classification B or C according to DIN 51097:1992.

10. The enamelled sanitary product according to Claim 9,
**characterised in that**
the covering enamel layer (2) is applied directly to the metallic main body (1).

## Revendications

1. Procédé, destiné à fabriquer un produit sanitaire émaillé, une masse d'application étant créée à partir d'au moins une fritte d'émail moulue, appliquée sur un corps de base (1) métallique et soumise à cuisson, **caractérisé en ce que** l'on créée la masse d'application par ajout d'un composé thermiquement instable, qui lors du processus de cuisson se décompose au moins partiellement en formant un gaz et il se créé un revêtement en émail de couverture, pourvu d'une surface antidérapante, laquelle comporte sous la surface des inclusions gazeuses (3) sous la forme de bulles de dioxyde de carbone et sur la surface des empreintes (4) en forme de cratères pourvues d'un creux (5) et d'un monticule (66) surélevé, et la surface formant une surface de marche, la surface de marche faisant preuve selon la norme DIN 51097:1992 d'un effet antidérapant du groupe d'évaluation B ou C.

2. Procédé selon la revendication 1, **caractérisé en ce qu'**en tant que composé thermiquement instable, il est prévu au moins un composé de carbonate de magnésium, notamment du carbonate de magnésium et/ou un hydroxycarbonate de magnésium.

3. Procédé selon la revendication 1 ou 2, **caractérisé en ce que** la masse d'application contient entre 0,4 et 5 parts en poids du composé thermiquement instable, rapportées à 100 parts en poids de fritte d'émail moulue.

4. Procédé selon l'une quelconque des revendications 1 à 3, **caractérisé en ce que** l'on moud conjointement avec la fritte d'émail des particules du composé thermiquement instable.

5. Procédé selon la revendication 4, **caractérisé en ce que** lors du processus de mouture, on ne moud que la fritte d'émail et on ajoute par la suite le composé thermiquement instable.

6. Procédé selon l'une quelconque des revendications 1 à 5, **caractérisé en ce que**, rapportées à 100 parts en poids de fritte d'émail, au moins 10 parts en poids de quartz moulu sont prévues.

7. Procédé selon l'une quelconque des revendications 1 à 6, **caractérisé en ce que** l'on réalise le processus de cuisson de telle sorte que la température maximale se situe entre 750 °C et 900 °C.

8. Procédé selon l'une quelconque des revendications 1 à 7, **caractérisé en ce que** l'on met à disposition en tant que corps de base (1) métallique une tôle d'acier déformée, notamment emboutie.

9. Produit sanitaire émaillé, fabriqué à l'aide d'un procédé selon l'une quelconque des revendications 1 à 8, pourvu d'un corps de base (1) métallique et pourvu d'une couche d'émail de couverture (2), laquelle est placée sur le corps de base (1) métallique et forme une surface, **caractérisé en ce que** la couche d'émail de couverture (2) comporte sous la surface des inclusions gazeuses (3) sous la forme de bulles de dioxyde de carbone et sur la surface des empreintes en forme de cratères (4) pourvues d'un creux (5) et d'un monticule (6) surélevé et la surface formant une surface de marche, la surface de marche faisant preuve selon la norme DIN 51097:1992 d'un effet antidérapant du groupe d'évaluation B ou C.

10. Produit sanitaire émaillé selon la revendication 9, **caractérisé en ce que** la couche d'émail de couverture (2) est appliquée directement sur le corps de base (1) métallique.
